# EUROPÄISCHE PATENTANMELDUNG

(11) **EP 4 372 499 A1**
(43) Veröffentlichungstag der Anmeldung: **22.05.2024**
(21) Anmeldenummer: 22207826.3
(22) Anmeldetag: 16.11.2022
(51) Int. Cl.: G05B 19/4068, G05B 19/414, G05B 19/4155

(54) **VERFAHREN ZUM BETRIEB EINER WERKZEUGMASCHINE**

(71) Anmelder: Siemens Aktiengesellschaft, 80333 München (DE)
(72) Erfinder: Eckstein, Oliver, 90768 Fürth (DE); Rost, Philipp, 90768 Fürth (DE); Schür, Torsten, 91058 Erlangen (DE)
(74) Vertreter: Siemens Patent Attorneys

(57) **Zusammenfassung**

Computergestütztes Verfahren zum Betrieb einer Werkzeugmaschine (1), wobei die Werkzeugmaschine (1) mindestens zwei bewegliche Achsen (X1, Y1, Z1, X2, Z2) umfasst, wobei
- in einem vorbestimmten Zeitabschnitt erste und zweite Daten erfasst werden, wobei
* die ersten Daten für Achsbewegungen der einzelnen Achsen (X1, Y1, Z1, X2, Z2) repräsentativ sind und auf Messungen innerhalb der Werkzeugmaschine (1) basieren, und
* die zweiten Daten Steuerbefehle für die einzelnen Achsen (X1, Y1, Z1, X2, Z2) umfassen,

- die ersten und die zweiten Daten ausgewertet werden, um für jede Achse (X1, Y1, Z1, X2, Z2) die Steuerbefehle den Achsbewegungen zuzuordnen,
- für jede Achse (X1, Y1, Z1, X2, Z2) eine oder mehr Arten der Achsbewegung bestimmt wird,
- ein oder mehr Signale erzeugt werden, um die eine oder mehr, für jede Achse (X1, Y1, Z1, X2, Z2) bestimmten Arten der Achsbewegung in Form einer aggregierten Ansicht (P_{A}) zu visualisieren,
- anhand der aggregierten Ansicht (P_{A}) gemeldet wird, welche Art der Achsbewegung beim Betrieb der Werkzeugmaschine in dem vorbestimmten Zeitabschnitt am längsten dauert.

## Beschreibung

Unabhängig vom Genus der in dieser Offenbarung verwendeten belebten Substantiven umfassen diese jegliche Geschlechtsidentität und jedes ethische Geschlecht mit.

Die vorliegende Offenbarung betrifft ein computergestütztes Verfahren zum Betrieb einer Werkzeugmaschine, wobei die Werkzeugmaschine mindestens zwei bewegliche Achsen umfasst.

Außerdem wird eine zur Datenübertragung mit einer Werkzeugmaschine eingerichtete Recheneinheit offengelegt, die konfiguriert ist, mit der Werkzeugmaschine derart zusammen zu wirken, so dass das vorgenannte Verfahren ausgeführt wird.

Obendrein wird ein Computerprogramm offengelegt, das Computerprogrammcode umfasst, der die vorgenannte Recheneinrichtung dazu befähigen, das vorgenannte Verfahren - im Rahmen eines Zusammenwirkens mit der Werkzeugmaschine - auszuführen.

Schließlich wird ein computerlesbares Medium offenbart, auf dem ein solches Computerprogramm gespeichert ist.

Im Bereich der Werkzeugmaschinen ist die Produktivitätssteigerung, beispielsweise die Reduzierung der Bearbeitungsdauer von Werkstücken, neben der Werkstückqualität ein sehr wichtiges Thema. Es ist oftmals jedoch nicht immer klar, wo im gesamten Bearbeitungsprozess Potenzial steckt, um die Bearbeitung zu beschleunigen.

Bisher erfolgen üblicherweise Prozessoptimierungen zwecks Bearbeitungsdauerreduktion durch getrenntes Betrachten der Einzelprozesse, wo innerhalb dieser Einzelprozesse Einsparpotenzial der Bearbeitungszeit liegt. Das ist aufwendig und oftmals bringen teils deutliche Prozessbeschleunigungen innerhalb eines Prozessschrittes kaum Einsparungen in Hinblick auf die Gesamtbearbeitungszeit, weil andere Prozesse dominieren.

Es ist somit wünschenswert, Mittel zur Verfügung zu stellen, die eine bessere Reduzierung der Dauer von mittels Werkzeugmaschinen ausgeführten Prozessen, vorzugsweise von Fertigungsprozessen, beispielsweise von Werkstückbearbeitungsprozessen oder von Prozessen der additiven Fertigung ermöglichen.

Die oben genannte Aufgabe kann mit einem Verfahren der vorgenannten Art gelöst werden, wobei in einem vorbestimmten Zeitabschnitt erste und zweite Daten erfasst werden. Die ersten Daten sind für Achsbewegungen der einzelnen Achsen repräsentativ. Vorzugsweise werden die ersten Daten für alle Achsen der Werkzeugmaschine erfasst. Darüber hinaus basieren die ersten Daten auf Messungen, die mit in der Werkzeugmaschine angeordneten Sensorik vorgenommen werden.

Die zweiten Daten umfassen Steuerbefehle für die einzelnen Achsen. Dies können beispielsweise Programmbefehle (z.B. G-Code) und/oder PLC-Signale. PLC steht für Programmable Logic Controller oder zu Deutsch: Speicherprogrammierbare Steuerung.

Die ersten und die zweiten Daten werden ausgewertet, um für jede Achse die Steuerbefehle den Achsbewegungen vorzugsweise unmittelbar beziehungsweise direkt zuzuordnen.

Außerdem wird für jede Achse eine oder mehr Arten der Achsbewegungen, beispielsweise anhand der durgeführten Zuordnung bestimmt. Denkbar ist auch, dass die Arten der Achsbewegungen unmittelbar aus den ersten Daten bestimmt werden. Die Arten der Achsbewegungen können dabei unterschiedlich sein. D.h. in dem vorbestimmten Zeitabschnitt kann jede Achse eine oder mehr Arten der Achsbewegung ausführen, z.B. stillstehen, mit einer konstanten Geschwindigkeit verfahren, beschleunigen oder abbremsen. Hierdurch ist beispielsweise möglich zu bestimmen, ob und wann die jeweilige Achse an einem während des Betriebs der Werkzeugmaschine ausgeführten Prozess, insbesondere Fertigungsprozess, beteiligt ist.

Außerdem kann zum Zeitpunkt eines Ereignisses die aktuelle Zeile im Teileprogramm bestimmt und die Stillstandzeiten den jeweiligen Unterprogrammen und Zyklen zugeordnet werden.

Anschließend werden ein oder mehr Signale erzeugt, um die eine oder mehr, für jede Achse bestimmten Arten der Achsbewegung in Form einer aggregierten Ansicht zu visualisieren.

Die Signale können beispielsweise unter Zuhilfenahme der ersten und/oder der zweiten Daten erzeugt werden. Dabei kann es zweckmäßig sein, Daten aus den ersten und/oder zweiten Daten anhand bestimmter Kriterien anzusammeln. Beispielsweise können jene Daten aus den ersten und/oder zweiten Daten aggregiert werden, die einer bestimmten Art der Achsbewegung, die von allen (an dem Bearbeitungsprozess beteiligten) Achsen ausgeführt wird, zugeordnet werden können. D.h. in der aggregierten Ansicht kann dargestellt werden, welche Arten der Achsbewegung von allen Achsen ausgeführt werden und wie das Verhältnis (im Hinblick auf die Zeit) unter den einzelnen (Bewegungs-)Arten aussieht.

Mit anderen Worten werden in der aggregierten Ansicht Gemeinsamkeiten der Bewegungen der einzelnen (an dem Bearbeitungsprozess beteiligten), insbesondere aller Achsen zusammengefasst und dargestellt.

Anhand der aggregierten Ansicht wird gemeldet, welche Art der Achsbewegung beim Betrieb der Werkzeugmaschine in dem vorbestimmten Zeitabschnitt am längsten dauert.

Mit der aggregierten Ansicht ist beispielsweise eine Visualisierung der jeweiligen Anteile und Arten der Achsbewegungen möglich, die während des vorbestimmten Zeitabschnittes von mehreren Achsen gleichzeitig und insbesondere von allen Achsen ausgeführt werden. So ist schnell im Gesamtprozess ersichtlich, welche Einzelprozesse oder auch welche Einzelbewegung(en) das größte Potenzial aufweisen, um z.B. die Prozesszeit zu reduzieren. Beispielsweise können die Zeiten, wenn alle Achsen stillstehen, auf Durchführen eventueller Kommunikationsaufgaben zwischen Steuerungspartner, beispielsweise einer CNC (einer CNC-Steuerung) und PLC ablaufen und dort Einsparpotenzial liegen könnte.

Es versteht sich, dass es sich bei einer Werkzeugmaschine um eine CNC-Maschine oder auch um einen Roboter beziehungsweise einen Roboterarm handeln kann, da ein Roboter - aus steuertechnischer Sicht - als eine Werkzeugmaschine mit einer Roboterkinematik angesehen werden kann. Die Roboter weisen - hauptsächlich - Rundachsen auf.

Die Meldung kann unterschiedlich ausgestaltet sein. Beispielsweise ist es vorstellbar, dass die am längsten dauernde Art der Achsbewegung an einem Anzeigemittel mit einer vordefinierten Farbe angezeigt wird. Die Meldung kann aber auch mit Hilfe einer Text- und/oder Tonnachricht erfolgen, um die Wahrnehmbarkeit der Meldung in bestimmten Fällen oder bei einem bestimmten Personenkreis zu verbessern.

Bei einer Ausführungsform kann es vorgesehen sein, dass zumindest für die ermittelte Art der Achsbewegung eine oder mehrere Maßnahmen zur Reduktion der Dauer vorgeschlagen werden.

Dabei kann jede Maßnahme aus der Gruppe sein, welche umfasst: Achsdynamik erhöhen, insbesondere Ruck, Beschleunigung, Geschwindigkeit steigern; Prozessgeschwindigkeit erhöhen; Nebenzeiten, insbesondere Werkzeugwechsel-Zeit, reduzieren.

Bei einer Ausführungsform kann es vorgesehen sein, dass die Arten der Achsbewegungen dynamische Anteile der Achsbewegungen sowie Stillstände der Achsen umfassen - also Bewegungen einer über ein Zeitintervall konstanten Art bzw. in dem Zeitintervall konstante Bewegung.

Beispielsweise ist "Stillstand" eine Bewegung mit einer konstanten Geschwindigkeit gleich Null.

Dabei kann es zweckdienlich sein, wenn jeder dynamische Anteil der Achsbewegungen aus der Gruppe ist, welche umfasst: Achsbewegungen mit konstantem Ruck, konstanter Beschleunigung, konstanter Geschwindigkeit (Konstantfahrt).

Sind die Abschnitte des im vorbestimmten Zeitabschnitt durchgeführten Prozesses bekannt, kann z.B. automatisiert bestimmt werden, wann und wie die einzelnen Achsen am Prozess beteiligt am gesamten Prozess sind oder stillstehen.

Bei einer Ausführungsform kann es vorgesehen sein, dass die ersten Daten hochfrequente Daten sind.

Die hochfrequente Datenerfassung z.B. über ein Edge-Gerät kann das gleichzeitige Mitschreiben der Achsbewegungen aller (am Prozess beteiligten) Achsen erleichtern.

Der Begriff "hochfrequent" bedeutet im Rahmen der vorliegenden Offenbarung, dass die Daten mit (vorzugsweise typischen) Taktfrequenzen der Steuerung der Werkzeugmaschine beziehungsweise des Antriebs der jeweiligen Achse erhoben/erfasst werden. Z.B. kann es sich dabei um Positionsdaten der Achsen handeln, die in einem Lageregeltakt der Steuerung beziehungsweise des Antriebs erfasst werden.

Bei einer Ausführungsform kann es vorgesehen sein, dass der vorbestimmte Zeitabschnitt einem Fertigungsprozessabschnitt, insbesondere einem Bearbeitungsvorgang korrespondiert.

Bei einer Ausführungsform kann es vorgesehen sein, dass die Auswertungstiefe der Datenauswertung angepasst werden kann. So ist z.B. auch möglich die Bereiche mit konstanter Geschwindigkeit hinsichtlich des Geschwindigkeitsniveaus auszuwerten, um detaillierter aufzuzeigen ob die Achsen z.B. mit G0, also Eilgang, fahren oder durch Prozessgeschwindigkeiten beschränkt sind.

Die Aufgabe kann auch mit der eingangs genannten Recheneinrichtung gelöst werden.

Bei einer Ausführungsform kann es vorgesehen sein, dass die Recheneinrichtung eine oder mehr miteinander vernetzte, im Datenaustausch stehende Recheneinheiten umfasst. Die Recheneinheiten können voneinander räumlich entfernt sein.

Es wird verstanden, dass die Datenübertragung (oder Datentransfer; engl.: data transmission) in der Informationstechnologie der Austausch von digitalen Daten zwischen zwei oder mehreren räumlich voneinander entfernten Absendern und Empfängern über Leitungen oder Funkverbindungen ist.

Bei einer Ausführungsform kann es vorgesehen sein, dass die Recheneinrichtung und insbesondere die darin enthaltenen Datenerfassungssysteme eine Speichertiefe, die genügt, um eine Datensammlung über den gesamten Fertigungs-/Bearbeitungsvorgang zu ermöglichen.

Die Erfindung sowie weitere vorteilhafte Ausgestaltungen der Erfindung werden anhand prinzipiell dargestellter Ausführungsbeispiele näher erläutert, darin zeigen:
- FIG 1: eine Werkzeugmaschine mit einer Recheneinrichtung,
- FIG 2: eine Visualisierung der Arten der Achsbewegung der einzelnen Achsen und eine aggregierte Ansicht, und
- FIG 3: ein Flussdiagramm eines computergestützten Verfahrens.

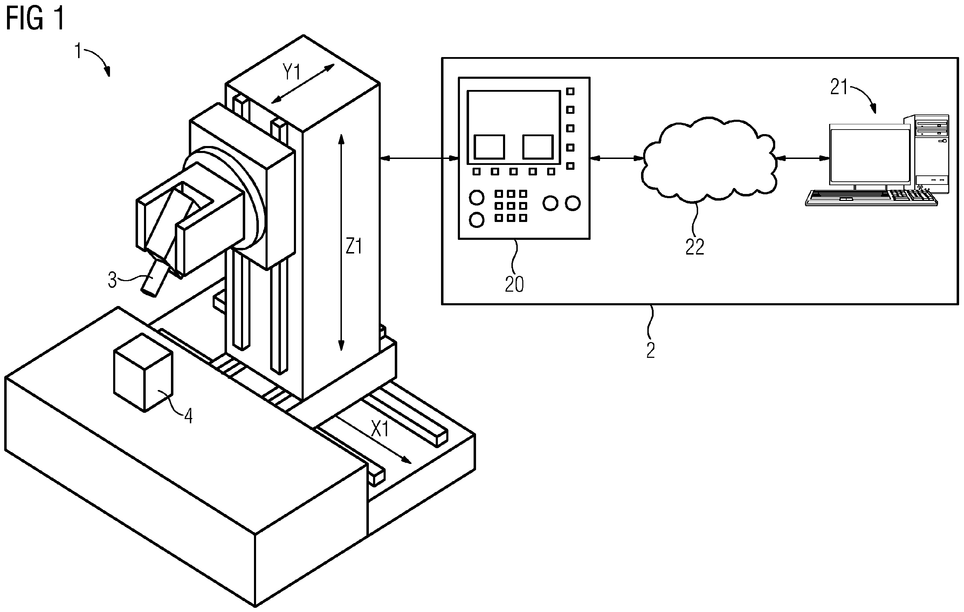

FIG 1 zeigt eine Werkzeugmaschine 1 mit Achsen X1, Y1 und Z1. Die Werkzeugmaschine 1 ist mit einer Recheneinrichtung 2 kommunikativ verbunden. Insbesondere kann die Datenübertragung zwischen der Werkzeugmaschine 1 und der Recheneinrichtung gemäß einem oder mehreren Kommunikationsprotokollen ablaufen.

Die Werkzeugmaschine 2 ist zu einer spanenden Bearbeitung eines Werkstücks 4 mit einem Werkzeug 3 ausgebildet.

Die Recheneinrichtung 2 umfasst beispielsweise eine NC-Steuerung 20 und einen Server beziehungsweise einen Rechner 21, welcher mit der Steuerung 20 über ein Netzwerk 22 verbunden werden kann. Das Netzwerk 22 kann ein öffentliches Netzwerk, z.B. das Internet oder ein privates Netzwerk sein.

An der Werkzeugmaschine 1 sind mehrere Sensoren angebracht (hier nicht gezeigt). Vorzugsweise sind physikalische und virtuelle Sensoren an der Werkzeugmaschine 1 vorhanden. Die Sensoren liefern während eines Bearbeitungsvorgangs Daten an die Recheneinrichtung 2.

Die Daten umfassen die ersten Daten, die für Achsbewegungen der einzelnen Achsen X1, Y1, Z1 und hier nicht gezeigten X2, Z2, repräsentativ sind und auf Messungen mittels der Sensoren basieren.

Außerdem stehen der Recheneinrichtung 2 zweite Daten zur Verfügung, die Steuerbefehle für die einzelnen Achsen umfassen.

Die Recheneinrichtung 2, vorzugsweise der Server 21 ist dazu eingerichtet, die ersten und die zweiten Daten auszuwerten, um für jede Achse die Steuerbefehle den Achsbewegungen zuzuordnen.

Bei der Zuordnung können beispielsweise dynamische Anteile der Achsbewegungen jeweiligen Abschnitten des NC-Programmcodes zugeordnet werden. Bei den dynamischen Anteilen kann es sich beispielsweise um konstanten Ruck, konstante Beschleunigung, oder konstante Geschwindigkeit handeln.

Die Zuordnung wird vorzugsweise für jede Achse durchgeführt. Auf diese Weise kann zum Zeitpunkt eines Ereignisses die aktuelle Zeile im Teileprogramm bestimmt und die Stillstandzeiten den jeweiligen Unterprogrammen und Zyklen zugeordnet werden.

Die Recheneinrichtung 2 kann weiterhin dazu konfiguriert sein, die Auswertungstiefe der Datenauswertung anzupassen beziehungsweise anpassen zu lassen. So ist z.B. auch möglich die Bereiche mit konstanter Geschwindigkeit hinsichtlich des Geschwindigkeitsniveaus auszuwerten, um detaillierter aufzuzeigen ob die Achsen z.B. mit G0, also Eilgang, fahren oder durch Prozessgeschwindigkeiten beschränkt sind.

Die Recheneinrichtung 2 ist außerdem dazu konfiguriert, Signale zu erzeugen, um die dynamischen Anteile der Achsbewegung für jede Achse einzeln und insbesondere für alle am Bearbeitungsprozess beteiligten Achsen in aggregierter Form zu visualisieren.

Die Visualisierung kann an einem Anzeigemittel der NC-Steuerung 20 oder/und des Rechners 21 erfolgen.

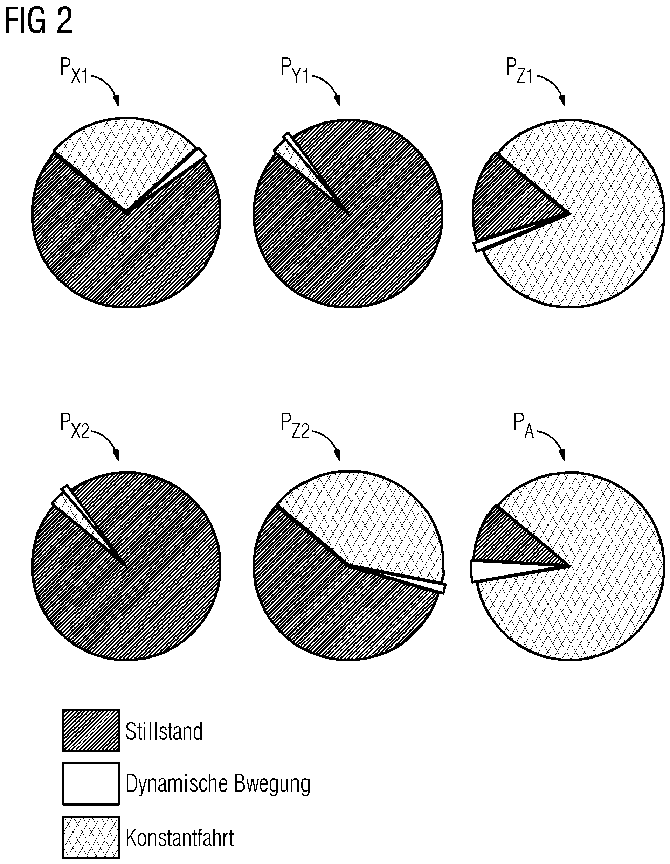

FIG 2 veranschaulicht eine mögliche Art der Visualisierung. Gezeigt sind Pie-Chart- beziehungsweise Kreisdiagramme Px₁, Py₁, Pz₁, Px₂, Pz₂, für jede der fünf Achsen X1, Y1, Z1, X2, Z2 der Werkzeugmaschine 1 und ein Pie-Chart-Diagramm P_{A} für alle am Bearbeitungsprozess beteiligten Achsen in aggregierter Form - aggregierte Ansicht. Jedem Diagramm Px₁, Py₁, Pz₁, Px₂, Pz₂, P_{A} ist zu entnehmen, dass die meist vorkommenden Bewegungsarten Konstantfahrt und Stillstand sind. Anhand der aggregierten Betrachtung P_{A} lässt sich feststellen, dass die Konstantfahrt den Bearbeitungsvorgang dominiert. Dies bedeutet, dass im vorliegenden Beispiel alle Achsen X1, Y1, Z1, X2, Z2 gleichzeitig die meiste Zeit mit einer konstanten Geschwindigkeit verfahren werden. Am zweithäufigsten stehen alle Achsen X1, Y1, Z1, X2, Z2 still. Die restliche Zeit des Bearbeitungsvorgangs geht darauf, alle Achsen gleichzeitig dynamisch zu bewegen, beispielsweise zu beschleunigen oder zu bremsen.

Nachdem der in dem Bearbeitungsvorgang dominierende dynamische Anteil festgestellt wurde, erfolgt eine Meldung darüber.

Die Meldung kann unterschiedlich ausgestaltet sein. FIG 2 lässt erkennen, dass der Teil des Kreisdiagramms, der dem am meisten dauernden dynamischen Anteil entspricht, farblich hervorgehoben und mit einem Text beschrieben wird.

Die Recheneinrichtung 2 kann dazu konfiguriert sein, für den ermittelten dynamischen Anteil der Achsbewegung eine oder mehrere Maßnahmen zur Reduktion der Dauer vorzuschlagen.

Beispielsweise kann die Empfehlung sein, die (hier konstante) Geschwindigkeit zu erhöhen, um die Zeit einzusparen. Die Empfehlung kann auf dem Anzeigemittel der NC-Steuerung 20 oder des Servers 21 erfolgen.

Die Visualisierung der Einzelprozesse eines Gesamtbearbeitungsprozesses bei der Bearbeitung eines Bauteils zeigt deren Anteile auf und ermöglicht dadurch eine einfache Beurteilung über den Aufwand und Nutzen der Optimierung dieser Teilprozesse mit dem Ziel z.B. die Gesamtbearbeitungszeit zu reduzieren.

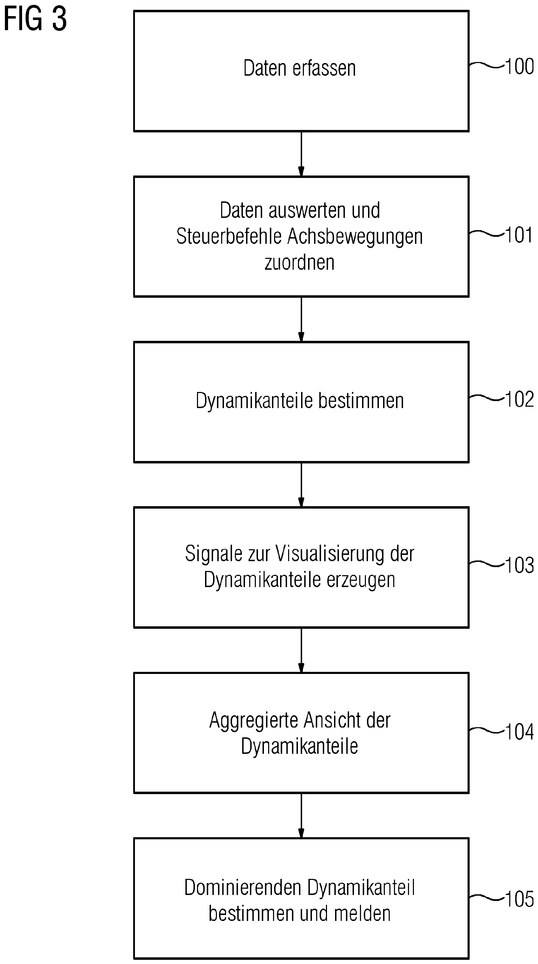

FIG 3 zeigt ein Flussdiagramm eines computergestützten Verfahrens zum Betrieb einer Werkzeugmaschine, beispielsweise der Werkzeugmaschine 1 der FIG 1.

In einem Schritt 100 werden die Daten - also die ersten und die zweiten Daten erfasst. Die ersten Daten sind beispielsweise auf Sensormessungen basierende Echtzeitdaten. Die zweiten Daten umfassen den beispielsweise Teileprogrammcode.

In einem Schritt 101 werden die Daten ausgewertet. Insbesondere werden dabei Teile des Teileprogrammcodes bestimmten Achsbewegungen zugeordnet.

In einem Schritt 102 werden Dynamikanteile beziehungsweise dynamische Anteile der Achsbewegungen für jede einzelne Achse ermittelt. Ihre Verknüpfung zu bestimmten Teilen des Teileprogrammcodes ist bereits aus Schritt 101 bekannt.

In einem Schritt 103 werden Signale zur Visualisierung der Dynamikanteile für die einzelnen Achsen und für die aggregierte Ansicht erzeugt.

Die aggregierte Ansicht der Dynamikanteile wird in Schritt 104 visualisiert.

Daraus wird in Schritt 105 der während des erfassten Bearbeitungsvorgangs dominierende dynamische Anteil bestimmt und gemeldet.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Vorrichtungen eingesetzt werden und *vica versa.*

## Patentansprüche

1. Computergestütztes Verfahren zum Betrieb einer Werkzeugmaschine (1), wobei die Werkzeugmaschine (1) mindestens zwei bewegliche Achsen (X1, Y1, Z1, X2, Z2) umfasst, wobei
- in einem vorbestimmten Zeitabschnitt erste und zweite Daten erfasst werden, wobei
* die ersten Daten für Achsbewegungen der einzelnen Achsen (X1, Y1, Z1, X2, Z2) repräsentativ sind und auf Messungen innerhalb der Werkzeugmaschine (1) basieren, und
* die zweiten Daten Steuerbefehle für die einzelnen Achsen (X1, Y1, Z1, X2, Z2) umfassen,
- die ersten und die zweiten Daten ausgewertet werden, um für jede Achse (X1, Y1, Z1, X2, Z2) die Steuerbefehle den Achsbewegungen zuzuordnen,
- für jede Achse (X1, Y1, Z1, X2, Z2) eine oder mehr Arten der Achsbewegung bestimmt wird,
- ein oder mehr Signale erzeugt werden, um die eine oder mehr, für jede Achse (X1, Y1, Z1, X2, Z2) bestimmten Arten der Achsbewegung in Form einer aggregierten Ansicht (P_{A}) zu visualisieren,
- anhand der aggregierten Ansicht (P_{A}) gemeldet wird, welche Art der Achsbewegung beim Betrieb der Werkzeugmaschine in dem vorbestimmten Zeitabschnitt am längsten dauert.

2. Verfahren nach Anspruch 1, wobei zumindest für die ermittelte Art der Achsbewegung eine oder mehrere Maßnahmen zur Reduktion der Dauer vorgeschlagen werden.

3. Verfahren nach Anspruch 2, wobei jede Maßnahme aus der Gruppe ist, welche umfasst: Achsdynamik erhöhen, insbesondere Ruck, Beschleunigung, Geschwindigkeit steigern; Prozessgeschwindigkeit erhöhen; Nebenzeiten, insbesondere Werkzeugwechsel-Zeit, reduzieren.

4. Verfahren nach einem der Ansprüche 1 bis 3, wobei die Arten der Achsbewegungen dynamische Anteile der Achsbewegungen sowie Stillstände der Achsen (X1, Y1, Z1, X2, Z2) umfassen.

5. Verfahren nach Anspruch 4, wobei jeder dynamische Anteil der Achsbewegungen aus der Gruppe ist, welche umfasst: Achsbewegungen mit konstantem Ruck, konstanter Beschleunigung, konstanter Geschwindigkeit.

6. Verfahren nach einem der Ansprüche 1 bis 5, wobei die ersten Daten hochfrequente Daten sind.

7. Verfahren nach einem der Ansprüche 1 bis 6, wobei die Steuerbefehle Programmbefehle und/oder PLC-Signale umfassen.

8. Verfahren nach einem der Ansprüche 1 bis 7, wobei der vorbestimmte Zeitabschnitt einem Fertigungsprozessabschnitt, insbesondere einem Bearbeitungsvorgang korrespondiert.

9. Recheneinrichtung (2), die zur Datenübertragung mit einer Werkzeugmaschine (1) eingerichtet ist und konfiguriert ist, mit der Werkzeugmaschine (1) zusammen zu wirken und dabei ein Verfahren nach einem der Ansprüche 1 bis 8 auszuführen.

10. Computerprogramm, umfassend Befehle, die eine Recheneinrichtung (2) nach Anspruch 9 zur Ausführung eines Verfahrens nach einem der Ansprüche 1 bis 8 befähigen.

11. Computerlesbares Medium, auf dem ein Computerprogramm nach Anspruch 10 gespeichert ist.
